Europäisches Patentamt

European Patent Office

Office européen des brevets

(11) Publication number: 0 187 970
A1

# EUROPEAN PATENT APPLICATION

(21) Application number: 85115930.1

(22) Date of filing: 13.12.85

(51) Int. Cl.⁴: **B60G 15/06**

(30) Priority: 14.12.84 IT 5416684 U
22.11.85 IT 5406985 U

(43) Date of publication of application:
23.07.86 Bulletin 86/30

(84) Designated Contracting States:
DE FR GB SE

(71) Applicant: FIAT AUTO S.p.A.
Corso Giovanni Agnelli 200
I-10135 Torino(IT)

(72) Inventor: Messina, Carmelo
Corso Inghilterra 31
I-19199 Torino(IT)
Inventor: Belletti, Renzo
Via del Pascolo 1
I-10042 Nichelino(IT)

(74) Representative: Prato, Roberto et al
c/o Ingg. Carlo e Mario Torta Via Viotti 9
I-10121 Torino(IT)

(54) Perfected vehicle steering wheel suspension.

(57) Steering wheel suspension whereby the shock absorber
(9) is secured to the vehicle body (3) via a flexible assembly
(7) also supporting the coil spring on the shock absorber; the
said suspension being characterised by the fact that the said
assembly is composed of a supporting plate (16) for the said
spring (6), a flexible pad (40) securable to the vehicle body -
(3), and a ball joint (21) connecting the shock absorber rod to
the pad, in such a manner as to allow rotation in any
direction.

Fig.2

EP 0 187 970 A1

Rank Xerox

## PERFECTED VEHICLE STEERING WHEEL SUSPENSION

The present invention relates to a perfected vehicle steering wheel suspension, designed to provide for greater driving comfort and smoother steering performance. Vehicle steering wheels (usually the front wheels) are generally known to be fitted with McPherson type suspensions, designed to allow limited displacement, when steering, of the shock absorber and the coil spring supported on the same; both of the latter being known to be secured, at one end, to the wheel hub and, at the opposite end, to the vehicle body, in particular, in "domes" formed on specific parts of the vehicle body. On known types of steering suspensions, such mutual displacement of the body and the shock absorber and spring, when steering, is provided for by a flexible connecting assembly inserted between the shock absorber and vehicle body, the said assembly comprising a deformable rubber pad and thrust bearings enabling mutual low-friction rotation of the spring supporting plate and the body. A major drawback back on suspensions of the said known type is that they allow for no mutual displacement of the body and shock absorber rod, thus resulting in steering resistance on the flexible connecting assembly, which not only impairs driving comfort when cornering, but also increases steering stiffness, making steering more difficule and/or strenuous for the driver.

Suspensions have been proposed whereby the flexible assembly also comprises a bearing enabling mutual rotation between the body and the shock absorber rod. Even these, however, have failed to provide a solution to the problem of steering stiffness caused by steering resistance on the flexible connecting assembly, owing to the fact that wheel jolting over rough ground and steering movements on the suspension produce conical angular movements between the body and shock absorber which, combined with rotational movement, result in complex mutual displacement of the shock absorber and body which, not being provided for by the bearing joint, exert strain on the rubber pad, thus resulting in steering stiffness and impaired driving comfort.

The aim of the present invention is to provide a suspension with a perfected flexible connecting assembly designed to totally eliminate resistance on the said assembly, even in the presence of complex mutual displacement of the shock absorber and body caused by simultaneous rotation and jolting of the wheels on which the said suspension is fitted.

With this aim in view, the present invention relates to a vehicle steering wheel suspension comprising a shock absorber connectable, at one end, to a respective wheel hub and, at the opposite end, to a body portion of the said vehicle, a coil spring on the said shock absorber, and a flexible assembly designed to secure a rod on the said shock absorber to the said body portion; characterised by the fact that the said flexible assembly comprises a flexible rubber pad securable to the said body portion, a plate for supporting one end of said spring, and a ball joint connecting the said rod integral with the said flexible pad, in such a manner as to enable the said shocker absorber to move in any direction in relation to the said flexible pad, subsequent to jolting and/or steering of the said wheel.

A non-limiting arrangement of the present invention will now be described with reference to the attached drawings in which:

- Fig.1 shows a partially-sectioned view of a front vehicle suspension according to the present invention;

- Fig.2 shows a larger-scale section of a detail on the Fig.1 suspension;

- Fig.3 shows the same detail as in Fig.2, according to a preferred alternative arrangement of the present invention.

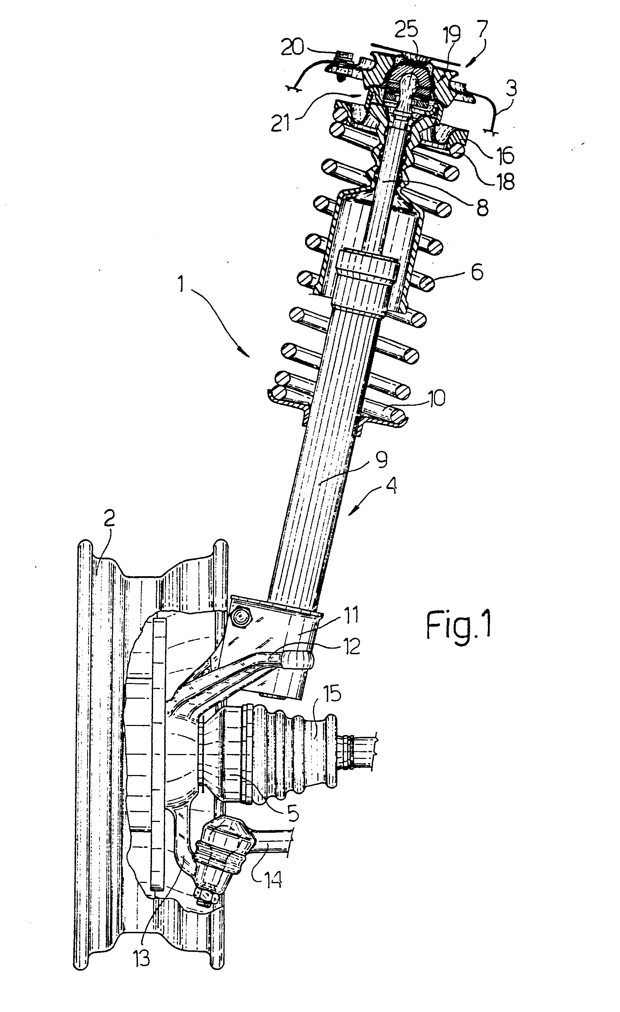

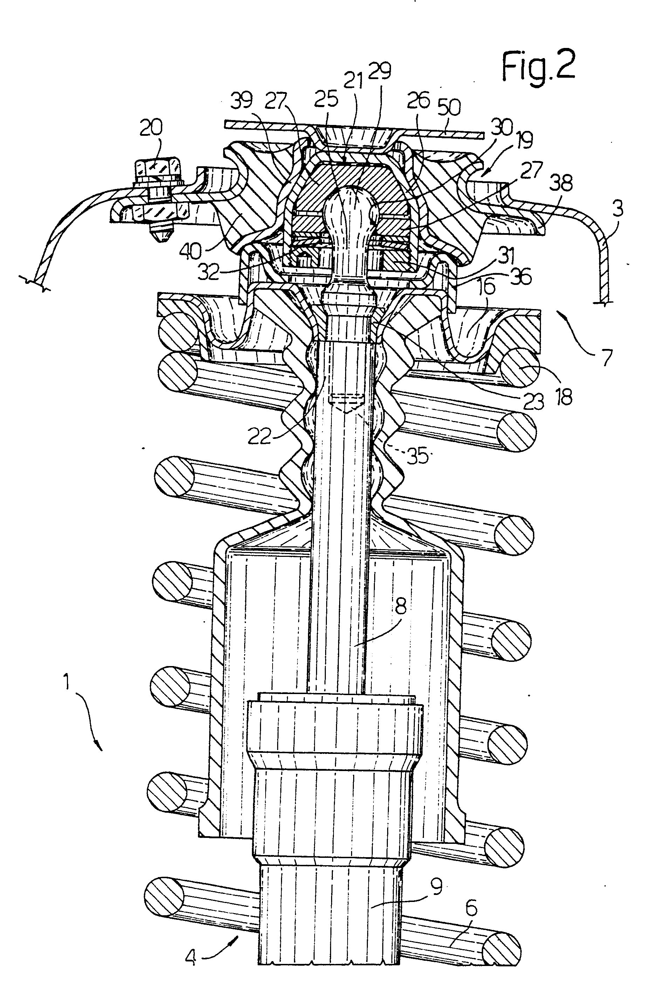

Number 1 in Fig.1 indicates a front steering suspension for a wheel 2 on any known type of vehicle (not shown for simplicity), the said suspension being designed to enable support of the said wheel 2 by a portion 3 of the said vehicle body, the said portion 3 consisting, for example, of a "dome" formed in an appropriate position on the said vehicle (not shown). In the non-limiting example shown, suspension 1 is a McPherson type, though clearly the following description may apply indifferently to any other known type of suspension designed to support the steering wheels of a vehicle. With reference also to Fig.2, suspension 1 comprises a known type of shock absorber 4 connectable, at the lower end, to a respective wheel hub 5 and, at the opposite end, to the said body portion 3, a coil spring 6 fitted in known manner onto shock absorber 4, and a flexible assembly 7 designed to secure the top of rod 8 on shock absorber 4 to the said body portion 3. In addition to rod 8, shock absorber 4 also comprises a body 9 to which is secured the lower end 10 of spring 6, and which is fitted integral with wheel hub 5, supporting wheel 2, by means of a known type of coupling 11. Suspension 1 also comprises two connecting arms, 12 and 13, the former for connecting a wheel 2 steering mechanism and the latter for connecting a rocker arm 14 connected in known manner to the body of the said vehicle (not shown), and a homokinetic coupling 15 for transmitting the drive torque to wheel hub 5.

According to the present invention, assembly 7 is fitted integral with rod 8 on shock absorber 4 and comprises a plate 16 for supporting the top end 18 of spring 6, a flexible rubber pad 19 securable in known manner to the said dome-shaped body portion 3, preferably by means of screws or bolts 20, and a ball joint 21 connecting rod 8 integral with flexible pad 19. In more detail, assembly 7 is fitted integral with the top end 22 of rod 8, and plate 16 is fitted angularly integral with end 22, for example, by means of sleeve 23. According to the present invention, joint 21 comprises a pin 25, a cup-shaped body 26 secured integral with flexible pad 19, and at least one pair of opposed semispherical thrust bearings 27 arranged facing each other, gripping pin 25 and housed inside the said cup-shaped body 26. According to the present invention, pin 25 is fitted integral with rod 8, projecting in relation to end 22, and is provided on its free end with a spherical bulb 29 housed in mobile manner inside a spherical cavity 30 defined by the said thrust bearings 27. The latter are gripped onto pin 25 and locked inside cup-shaped body 26, in such a manner as to universally secure bulb 29 onto body 26, by means, for example, of a threaded ring nut 31, screwed into the mouth of body 26, and by means of respective Belleville washers 32 secured onto thrust bearings 27 by ring nut 31 and also designed to take up any working slack caused by wear on bulb 29 or thrust bearings 27. In the example shown, pin 25 is secured onto end 22 by means of a threaded coupling 35, so as to enable assembly of sleeve 23 and allow plate 16 to be locked onto rod 8. Pin 25, however, may obviously be formed integral in one piece with rod 8, in which case, place 16 and joint 21 must be assembled prior to inserting rod 8 inside body 9.

Plate 16 is fitted onto rod 8 facing flexible pad 19, and a sealing sleeve 36, preferably made of rubber, is inserted between plate 16 and pad 19 for sealing lubricating grease inside joint 21 and projecting the latter against external pollutants. Flexible pad 19 is of essentially known structure and comprises an essentially rigid, cup-shaped outer sleeve 38 made of metal, a rigid sleeve 39, also cup-shaped, concentric with sleeve 38 and constituting the innermost part of paid 19, and an intermediate, elastically deformable sleeve 40 made of rubber or any other elastomer and preferably vulcanized to both sleeves 39 and 38 in such a manner as to secure the latter together elastically.

Inner sleeve 39 is designed to house body 26 and is secured integral with the same in any convenient manner, e.g. force fitted or welded. A stop cap 50 may conveniently be fitted integral with the bottom wall on body 26, subsequent to insertion of the latter inside sleeve 39, in such a manner as to prevent accidental withdrawal of the said body 26 and, with it, joint 21, from sleeve 39. Body 26 is preferably clicked into sleeve 39 by means of appropriate sizing of the latter, so that, during assembly, pad 19 may be fitted straight onto vehicle body portion 3, using screws 20, whereas joint 21 and plate 16 may be fitted separately onto shock absorber 4, in such a manner as to form a subassembly, which may subsequently be clicked onto the vehicle body in one single operation, by inserting body 26 inside sleeve 39. In this case also, subsequent assembly of stop cap 50 presents any possibility of accidental withdrawal of joint 21 from pad 19, once suspension 1 is fully assembled.

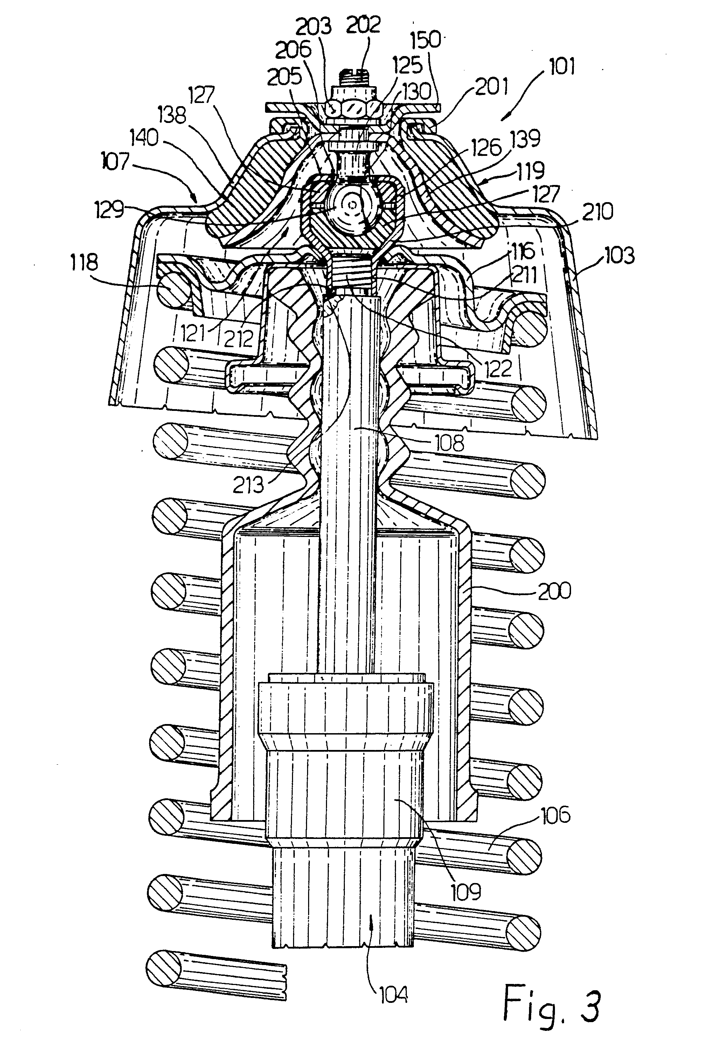

The advantages of the suspension according to the present invention will be clear from the foregoing description. By virtue of bulb 29 being housed in mobile manner inside spherical cavity 30, shock absorber 4 is free to move in any direction in relation to pad 19 and the vehicle body, thus enabling shock absorber 4 to accompany any jolting or steering control movement of wheel 2. By means of ball joint 21, rod 8 and plate 16 are free, not only to turn in relation to body portion 3, but also to change position in relation to the same by rocking conically about the axis of symmetry of sleeves 38 and 39. This prevents any resistance developing on flexible assembly 7 according to the present invention, even in the event of severe jolting or steering of the wheel supported on the suspension, thus providing for greater driving comfort and easier steering of the vehicle fitted with such a suspension. Clearly, a suspension of the type described herein is relatively cheap to produce and extremely easy to assemble. Furthermore, part of the suspension may be assembled off-line, as a subassembly, thus providing for more accurate assembly and even lower cost. The foregoing characteristics, in particular, easy assembly and low-cost production, may be considerably improved by adopting, in place of suspension 1 as described, the variation shown in detail in Fig.3.

The latter shows a front suspension 101 of the same type as suspension 1, designed to enable support of a wheel by a "dome" 103 integral with or securable in any appropriate known manner to the vehicle body. Suspension 101 is also preferably a McPherson type, though the following description may obviously apply to any other known type of suspension designed for the purpose of supporting steering wheels. Suspension 101 comprises a known type of shock absorber 104 connectable, at the bottom end, to the said wheel and, at the top end, to "dome" 103, a coil spring 106 fitted in known manner onto shock absorber 104, and a flexible assembly 107 designed to secure the top of rod 108 in shock absorber 104 to "dome" 103. In addition to rod 108, shock absorber 104 also comprises a body 109 to which is secured in known manner (not shown) the bottom end of spring 106 and which is fitted integral in known manner to the said vehicle wheel, and a sleeve 200 fitted onto the top of body 109 for protecting rod 108.

Flexible assembly 107 is integral with rod 108 on shock absorber 104 and comprises a plate 116 for supporting the top end 118 of spring 106, a rubber paid 119 securable to "dome" 103 in any appropriate manner (not shown), e.g. by means of screws or bolts, or formed integral with the same, and a ball joint 121 universally connecting rod 108 integral with flexible pad 119. In more detail, flexible assembly 107 is fitted in integral manner onto the top end 122 (preferably threaded) of rod 108, whereas plate 116 is fitted angularly integral with end 122, either directly or, as shown, indirectly by means of joint 121. According to the present invention, the said joint 121 comprises a pin 125, a cup-shaped casing 126 secured integral with rod 108 and fitted externally integral with plate 116, and at least one pair of opposed semispherical thrust bearings 127 arranged facing each other, gripping pin 125 and, in turn, housed inside cup-shaped casing 126. Flexible pad 119 is of essentially known structure and comprises an essentially rigid, cup-shaped outer sleeve 138 made of metal and, for example, formed integral with dome 103, a rigid sleeve 139 also cup-shaped, concentric with sleeve 138 and constituting the innermost part of pad 119, and an intermediate, elastically deformable sleeve 140 made of rubber or any other elastomer and preferably vulcanized to both sleeves 139 and 138 in such a manner as to secure the latter together elastically. Inner sleeve 139 is designed in such a manner as to house joint 121 and is preferably provided at the top with an outer stop cap 150 secured in any appropriate manner, e.g. welded, and designed to cooperate with a top appendix 201 in elastomer sleeve 140 in such a manner as to limit the vertical stroke of shock absorber 104 allowed by flexible pad 119.

According to the said alternative arrangement of the present invention, pin 125 is secured integral and in projecting manner inside sleeve 139 by means of a threaded coupling consisting of a threaded end 202 on pin 125 and a respective nut 203 provided with appropriate locking means. Pin 125 is also provided on its free end with a spherical bulb 129 housed in idle manner inside a spherical cavity 130 defined by thrust bearings 127. The latter are gripped onto pin 125 and locked inside cup-shaped body 126, in such a manner as to universally secure bulb 129 to body 126, by retaining means preferably consisting of a bottom wall 205 on casing 126, the said wall having a centre through hole 206 enabling entry of the free end of pin 125 inside casing 126, and a funnel-shaped end 210 on casing 126 located opposite the said bottom wall 205 and calked or pressed in any permanently deformable manner onto lower thrust bearing 127. According to the arrangement shown, end 210 is provided with a threaded sleeve 211 designed to screw onto threaded end 122 of rod 108 for securing casing 126 to the same, and is fitted integral on the outside with plate 116 which is fitted onto funnel-shaped end 210 in any appropriate manner, e.g. by permanent deformation or welding. To prevent casing 126 from working loose and disengaging from rod 108, sleeve 211 is secured angularly integral with rod 108 by means of a tab 212 bent inside a side cavity 213 formed on rod 108 next to end 122.

By virtue of the aforementioned structure, suspension 101 may be assembled by first assembling joint 121, by fitting bulb 129 and thrust bearings 127 inside casing 126 and permanently deforming funnel-shaped end 210, and then assembling the joint 121 so formed onto shock absorber 104 by screwing and then locking sleeve 211 onto threaded end 122, after first fitting plate 116 onto casing 126. The subassembly so formed may then be fitted directly onto flexible pad 119 by locking pin 125, by means of nut 203, onto inner sleeve 139, in such a manner as to form suspension 101 which may then be assembled on-line onto the vehicle body. Alternatively, the said subassembly may be sent directly onto the assembly line, taking care to assemble pad 119 beforehand onto the vehicle body. In like manner, final assembly of suspension 101 consists in assembling the same onto the vehicle body, thus enabling on-line assembly work to be speeded up and simplified.

**Claims**

1) - Vehicle steering wheel suspension comprising a shock absorber connectable, at one end, to a respective wheel hub and, at the opposite end, to a body portion of the said vehicle, a coil spring on the said absorber, and a flexible assembly designed to secure a rod on the said shock absorber to the said body portion; characterised by the fact that the said flexible assembly comprises a flexible rubber pad securable to the said body portion, a plate for supporting one end of the said spring, and a ball joint connecting the said rod integral with the said flexible paid, in such a manner as to enable the said shock absorber to move in any direction in relation to the said flexible pad, subsequent to jolting and/or steering of the said wheel.

2) - Suspension acording to Claim 1, characterised by the fact that the said ball joint comprises a pin fitted integral with the said rod and having a spherical bulb on its free end, a cup-shaped body secured integral with the said flexible pad, at least one pair of opposed semispherical thrust bearings arranged facing each other, housed inside the said cup-shaped body and defining a spherical cavity, and retaining means for securing the said pin between the said thrust bearings inside the said cup-shaped body; the said bulb being housed in mobile manner inside the said spherical cavity.

3) - Suspension according to Claim 2, characterised by the fact that the said pin is integral in one piece with the said shock absorber rod.

4) - Suspension according to Claim 2, characterised by the fact that the said pin is screwed in projecting manner inside one end of the said rod, in such a manner as to be angularly integral with the same.

5) - Suspension according to Claim 2, characterised by the fact that the said pin is formed integral in one piece with the said rod.

6) - Suspension according to one of the foregoing Claims from 2 to 5, characterised by the fact that the said flexible pad comprises a pair of rigid, cup-shaped, concentric sleeves secured together via an intermediate, elastically deformable sleeve made of rubber, the outermost of the said sleeve being securable by means of screws or bolts to the said vehicle body.

7) - Suspension according to one of the foregoing Claims, characterised by the fact that the said spring supporting plate is secured angularly integral with the said rod and facing the said flexible pad; a sealing sleeve being inserted between the latter and the said plate for protecting the said ball joint.

8) - Suspension according to Claim 1, characterised by the fact that the said ball joint comprises a pin secured integral and in projecting manner onto the said flexible pad and having a spherical bulb on its free end, a cup-shaped casing secured integral with the said shock absorber rod, at least one pair of opposed semispherical thrust bearings arranged facing each other, housed inside the said cup-shaped casing and defining a spherical cavity, and retaining means for securing the said pin between the said thrust bearings inside the said cup-shaped casing, in such a manner as to house the said bulb in idle manner inside the said spherical cavity.

9) - Suspension according to Claim 8, characterised by the fact that the said retaining means consist of a bottom wall on the said cup-shaped casing, the said wall having a centre through hole enabling entry of the said free end of the said pin inside the said casing, and a funnel-shaped end on the said cup-shaped casing, located opposite the said bottom wall and calked onto one of the said thrust bearings.

10) - Suspension according to Claim 9, characterised by the fact that the said funnel-shaped end is provided with a threaded sleeve by means of which the said cup-shaped casing is secured integral with the said showk absorber rod.

11) - Suspension according to Claim 10, characterised by the fact that the said threaded sleeve is secured angularly to the said shock absorber rod by means of a tap bent inside a side cavity on the said rod.

12) - Suspension according to one of the foregoing Claims from 9 to 11, characterised by the fact that the said flexible pad comprises a pair of rigid, concentric, cup-shaped sleeves secured together by means of an intermediate, elastically deformable sleeve made or rubber; the said pin being secured, by means of a threaded coupling, inside the innermost of the said rigid sleeves.

Fig.1

Fig.2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 242 442 (DAIMLER BENZ)<br>* figure; page 3, line 5 - page 4, line 2 * | 1 | B 60 G 15/06 |
| Y | | 2-6,8 | |
| | --- | | |
| Y | FR-E- 35 904 (TATRA)<br>* figure * | 2-6 | |
| | --- | | |
| Y | US-A-3 075 600 (ORDORICA et al.)<br>* figure 3; column 2, lines 21-31 * | 8 | |
| A | | 9,10 | |
| | --- | | TECHNICAL FIELDS SEARCHED (Int. Cl.4) |
| A | DE-B-2 705 321 (EHRENREICH)<br>* figure 1; column 2, lines 26-38 * | 8-11 | B 60 G 15/00 |
| | --- | | |
| A | DE-B-2 852 655 (EHRENREICH)<br>* column 2, lines 20-46; figure 3 * | 7-9,12 | |
| | --- | | |
| A | FR-A-2 519 589 (RIV. SKF. OFFICINE DI VILLAR PEROSA)<br>* figure 6; page 8, lines 6-31 * | 6,12 | |
| | ----- | | |

The present search report has been drawn up for all claims

| Place of search | Date of completion of the search | Examiner |
|---|---|---|
| BERLIN | 11-03-1986 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82